# EUROPÄISCHE PATENTSCHRIFT

(11) **EP 3 154 106 B1**
(45) Veröffentlichungstag und Bekanntmachung des Hinweises auf die Patenterteilung: **10.01.2024**
(21) Anmeldenummer: 16195951.5
(22) Anmeldetag: 20.09.2005
(51) Int. Cl.: H01M 10/052, H01M 50/213, H01M 50/503, H01M 50/509, H01M 50/51, H01M 50/516, H01M 50/522, H01M 50/528, H01M 10/46

(54) **ELEKTROHANDWERKZEUGGERÄT**
POWER TOOL
APPAREIL ÉLECTROPORTATIF

(43) Veröffentlichungstag der Anmeldung: 12.04.2017
(62) Teilanmeldung aus: 05793680.9
(73) Patentinhaber: Metabowerke GmbH, 72622 Nürtingen (DE)
(72) Erfinder: Liersch, Ralph, 72555 Metzingen (DE); Stickel, Wolfgang, 72660 Beuren (DE); Gräber, Jochen, 73266 Bissingen (DE)
(74) Vertreter: Markfort, Iris-Anne Lucie

(56) Entgegenhaltungen:
- EP-A2- 1 548 859
- CN-U- 203 721 827
- DE-A1- 10 055 158
- JP-A- 2005 209 369
- US-A1- 2021 202 974

## Beschreibung

Die Erfindung betrifft einen Akkupack, der mit einem Elektrohandwerkzeug verbindbar ist, sowie ein Elektrohandwerkzeuggerät mit einem Ackupack, der mit dem Elektrohandwerkzeuggerät verbindbar ist, um das Elektrohandwerkzeuggerät mit elektrischer Energie zu versorgen, aufweisend mindestens zwei in Reihe geschaltete Akkuzellen und/oder Ackuzellenblöcke, eine Elektronikeinheit mit einer Leiterplatte, Leiterbleche, die zur elektrische Verbindung der in Reihe geschalteten Akkuzellen und/oder Akkuzellenblöcke vorgesehen sind, und einen Zellenträger.

So ist es zum Betrieb von Elektrohandwerkzeugen vielfach vorgesehen, Akkupacks einzusetzen, da Akkugeräte eine höhere Flexibilität beim Arbeiten und insbesondere eine Unabhängigkeit von einer vorhandenen Stromquelle ermöglichten und somit auch Außenarbeiten unbeschränkt von der Frage einer Stromquelle durchgeführt werden können. Dabei weisen Akkugeräte einen wiederaufladbaren Akkumulator in einem Ackugehäuse auf, das mit dem Gerätegehäuse eines Elektrohandwerkzeuggeräts koppelbar ist, wobei beim Koppeln der beiden Gehäuse der Motor elektrisch an den Akkupack angekoppelt und darüber mit Strom versorgt wird. Zum Koppeln der beiden Gehäuse ist gewöhnlich das Ackugehäuse mit einer überstehenden Verrastvorrichtung versehen, die in eine komplementäre Einsteckbuchse des Gerätegehäuses eingeschoben und in dieser verrastet wird. Die elektrische Kontaktierung erfolgt zumeist im Bereich der Verrastvorrichtung.

In aller Regel ist es vorgesehen, die Akkuzellen untereinander bzw. Ackuzellenblöcke untereinander in Reihe zu schalten. Für die Reihenschaltung werden zum Teil sogenannte Leiterbleche verwendet, die die jeweiligen komplementären Pole einer Akkuzelle miteinander verbinden.

Eine analoge Ausgestaltung für eine Batterie ist beispielsweise aus der DE 94 04 070.2 bekannt, die einen Batteriesatz beschreibt, bei dem einzelne Batterien in batterieaufnehmenden Zellen angeordnet sind, wobei Leiterbleche verwendet werden, die zur Verbindung und Reihenschaltung der einzelnen Batterien miteinander dienen. Die Leiterbleche sind hierbei gemäß der Beschreibung bogenförmig angeordnet.

Darüber hinaus ist es bekannt, bei Lithiumionenakkus, bei denen der Ladezustand und der Aufladevorgang über die Elektronik des Akkupacks überwacht werden, vorzusehen, dass die einzelnen Akkuzellen zur Überwachung ihrer Zellen mit der Elektronik verbunden sind. Hierzu werden im Stand der Technik Litzen vorgesehen, die die Akkuzellen mit der Elektronikeinheit und hier insbesondere der Leiterplatte verbinden. Nachteilig ist dabei der verhältnismäßig hohe Montageaufwand.

Daneben ist aus den Dokumenten DE 32 46 968 A1 und EP 1 109 237 A eine Akkupackanordnung bekannt, bei der in Schichten angeordnete Zellen, die auf beiden Seiten durch elektrische Kontaktanordnungen oder Anschlussteile miteinander verbunden sind. Alternativ offenbart auch die EP 1 548 859 A2 das Vorsehen mehrerer Kontaktteile zur Kontaktierung der Akkuzellen in einem Zellenhalter. Die Anordnung mehrerer Anschlussteile bzw. Kontaktteile ist jedoch in der Praxis aufwändig bei der Herstellung der Akkupackanordnungen.

Aus der DE 100 55 158 A1 ist weiterhin ein Batteriepaket bekannt, bei dem zur besseren Luftkühlung zwei Gruppen von Akkuzellen durch in zwei Schichten angeordnete Akkuzellen gebildet werden, wobei die Gruppen durch einen Zwischenraum von einander getrennt sind, so dass Kühlluft zwischen den beiden Akkuzellengruppen hindurchfließen kann.

In der JP 2005-209369 A ist ein luftgekühlter Akkupack beschrieben, bei dem die einzelnen Akkuzellen nebeneinander in einem Akkupackgehäuse angeordnet und über Leiterbleche miteinander verbunden sind. Die beiden Pole der Akkuzellen sind auf einer Stirnseite der Akkuzellen angeordnet, so dass die Akkuzellen parallel und in gleicher Orientierung innerhalb des Gehäuses aufgenommen sind. Die Leiterbleche sind wiederum mit einer Leiterplatte verbunden, die benachbart zu den Polen der Akkuzellen angebracht ist. Ein Kühlventilator liefert Kühlluft, um die zueinander beabstandeten Akkuzellen zu kühlen.

Schließlich offenbart die JP 2004/0321284 eine Akkupackanordnung, bei der in Schichten angeordnete Zellen in einem Gehäuse aufgenommen sind. Auch diese Anordnung erfordert eine genaue Herstellung und Montage.

Es ist daher Aufgabe der Erfindung, ein Elektrohandwerkzeuggerät mit einem Akkupack bereitzustellen, bei dem eine Reihenschaltung der Ackuzellen untereinander sowie die Anbindung an die Leiterplatte vereinfacht ist. Eine weitere Aufgabe besteht darin, ein Elektrohandwerkzeuggerät mit einem besonders robusten Akkupack bereitzustellen.

Als Lösung schlägt die vorliegende Erfindung ein Akkupack mit den Merkmalen des Anspruchs 1 sowie ein Elektrohandwerkzeuggerät mit den Merkmalen des Anspruchs 10 vor.

Durch die Lagerung der Akkuzellen mittels eines Zellenträgers in der Weise, dass keine Berührung der Akkuzellen untereinander erfolgt, wird verhindert, dass Kurzschlüsse über die Berührung der einzelnen Akkuzellen miteinander entsteht. Der Zellenträger kann dabei insbesondere aus einem Spritzgussteil bestehen, das entsprechende Aufnahmen für die Akkuzellen aufweist.

Zudem ist erfindungsgemäß vorgesehen, dass der Akkupack solche Leiterbleche vorsieht, die über ein Verbindungselement unmittelbar mit der Leiterplatte verbunden sind. Auf diese Weise kann auf eine zusätzliche Kontaktierung über Litzen der einzelnen Akkuzellen mit der Elektronik verzichtet werden.

Dabei ist es besonders vorteilhaft, dass gleichzeitig über die Leiterbleche, welche über ein Verbindungselement zugleich elektrisch und mechanisch mit der Leiterplatte verbunden sind, eine elektrische als auch mechanische Verbindung zwischen den einzelnen Akkuzellen und der Leiterplatte erfolgt. Auf diese Weise kann gleichzeitig eine Halterung der Leiterplatte durch die Leiterbleche gegenüber einer Akkuzelle oder einem Akkuzellenblock erreicht werden. Unter Akkuzellenblöcke sind hierbei zwei oder mehr Akkuzellen zu verstehen, die parallel geschaltet sind und mit weiteren Akkuzellen oder Akkuzellenblöcken seriell gekoppelt sind.

Generell besitzt die mechanisch wie auch die elektrische Kopplung über Leiterbleche an die Leiterplatte den Vorteil, dass die Leiterplatte gegenüber den Akkuzellen bzw. Akkuzellenblöcken federnd gelagert ist, da die Leiterbleche zugleich als Federelemente wirken. Auf diese Weise kann eine zusätzliche Vibrationsfestigkeit erreicht werden, da insbesondere Vibrationen, wie sie bei Elektrohandwerkzeugen, insbesondere bei Schlagbohreinrichtungen oder Bohrhämmern im Betrieb entstehen, ausgeglichen werden können.

Dabei ist es besonders vorteilhaft, wenn die Leiterbleche mit der Leiterplatte über Nietverbindungen festgelegt sind. Zum einen wird eine besonders einfache mechanische und auch elektrische Kontaktierung über Nietverbindungen erreicht, zum anderen bietet eine Nietverbindung auch eine große Sicherheit. Schließlich kann durch eine entsprechende Nietverbindung auch ein Toleranzausgleich sowie ein Wärmedehnungsausgleich erzielt werden.

Dabei kann vorgesehen sein, dass die Leiterbleche geometrisch so gestaltet sind, dass sie in Form von seitlichen Anschlussfahnen von der Leiterplatte abstehen. Sie können dann so abgewinkelt werden, dass sie von der Leiterplatte in Richtung der Akkuzellen weisen.

Die Kombination dieser verschiedenen Gesichtspunkte in einem Bauteil stellt dabei den besonderen Vorteil der Erfindung dar.

Die Akkuzellen können dabei insbesondere Lithiumionenzellen sein. Insbesondere bei Lithiumzellen ist es möglich, mehrere Akkuzellen zu sogenannten Akkuzellenblöcken zusammenzufassen, in denen mehrere Ackuzellen parallel geschaltet sind. Hierbei wird jeweils ein Akkuzellenblock mit der Elektronik verbunden. Mittels der Elektronik kann u. a. der Ladezustand über die Spannung der einzelnen Zellen überwacht werden. Des Weiteren kann so eine Laderegelung erfolgen. Dabei liegt hinter parallel geschalteten Zellen stets die gleiche Spannung an, so dass die Spannung bei Akkuzellenblöcken je Block bestimmt werden muss.

Durch die Kopplung der Akkuzellen bzw. Akkuzellenblöcke an die Leiterplatte kann festgestellt werden, ob alle Akkuzellen vorschriftsmäßig geladen werden bzw. ob gegebenenfalls ein Ladestrom erreicht wird, den die Akkuzellen nicht zu verkraften vermögen. Darüber hinaus kann eine Regelung vorgesehen sein, mittels derer der Ladestrom so geregelt wird, dass eine Überlastung einzelner Akkuzellen verhindert wird und auf der anderen Seite sämtliche Akkuzellen vollständig aufgeladen werden können. Auf diese Weise wird über lange Zeit eine gute Gebrauchsfähigkeit des entsprechenden Akkupacks und damit des mit diesem verwendeten Elektrohandwerkzeuggeräts erreicht.

Die Pole der einzelnen Akkuzellen können dabei materialschlüssig, insbesondere über Schweiß- oder Lötverbindungen, mit den Leiterblechen verbunden sein.

Darüber hinaus kann auch vorgesehen sein, dass am Zellenträger Befestigungselemente vorgesehen sind, mit denen der Zellenträger mit den darin aufgenommenen Akkuzellen, die gemeinsam als Corepack bezeichnet werden, mit der Elektronikeinheit verbunden wird. Eine entsprechende Verbindung kann beispielsweise über eine Rastverbindung erfolgen, indem entsprechende Rasteinrichtungen am Corepack vorgesehen sind, die Rastvorsprünge unter mechanischer Verformung an der Elektronikeinheit hintergreifen und so für eine formschlüssige Verbindung sorgen.

Die Elektronikeinheit kann über die Leiterplatte hinaus noch ein Elektronikgehäuse umfassen, in das die Leiterplatte mit den hieran montierten Leiterblechen aufgenommen wird. Die Leiterplatte trägt schließlich eine Reihe weiterer Elektronikelemente und es kann eine Software zur Steuerung, Regelung oder auch zur Erkennung des Akkupacks auf die Leiterplatte aufgespielt werden. Darüber hinaus können weitere Bauteile, wie insbesondere Schalter, aber auch Ladezustandsanzeigen, mit der Leiterplatte verbunden sein. Die Leiterplatte wird dann insbesondere in das Elektronikgehäuse eingefügt, und das Elektronikgehäuse wird dann mittels eines Harzes ausgegossen, so dass die Leiterplatte mit dem Elektronikgehäuse fest verbunden ist.

Die Erfindung soll im Folgenden anhand einer Zeichnung näher erläutert werden. Dabei zeigen:
- Figur 1: eine Explosionsdarstellung der Elektronikeinheit sowie eines Corepacks eines Akkupacks;
- Figur 2: einen Akkupack ohne Akkugehäuse; und
- Figur 3: einen Ausschnitt aus Figur 2 hinsichtlich der Verrastung.

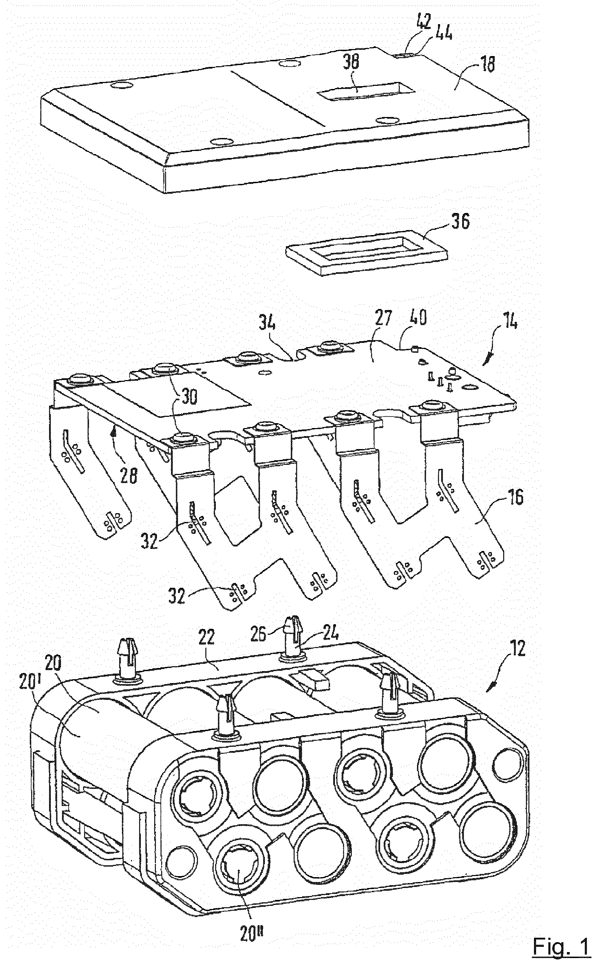

Figur 1 zeigt eine Explosionsdarstellung eines Corepacks (untere Darstellung), der in seiner Gesamtheit mit 12 bezeichnet ist, sowie einer Leiterplatte 14 mit Leiterblechen 16 (mittlere Darstellung) sowie eines Elektronikgehäuses 18 (obere Darstellung).

Das Corepack 12 umfasst hierbei acht Akkuzellen 20, wobei jeweils zwei Zellen 20' und 20" zu einem Akkuzellenblock parallel geschaltet sind. Bei den Akkuzellen 20 handelt es sich um Lithiumionenzellen, die, anders als Nickel-Cadmium-Zellen, eine Parallelschaltung ermöglichen. Die Ackuzellenblöcke bestehen aus den Akkuzellen 20' und 20" und sind jeweils in Reihe hintereinander geschaltet. Die Akkuzellen 20 sind in einen Zellenträger 22 aufgenommen und durch diesen voneinander derart getrennt, dass keine Berührung der Akkuzellen 20 untereinander erfolgt, da dies zu Kurzschlüssen führen könnte. Die Pole der einzelnen Akkuzellen 20 sind hierbei durch den Zellenträger 22 ausgespart, so dass eine elektrische Kontaktierung vorgenommen werden kann.

Darüber hinaus ist am Zellenträger 22 eine Verrastvorrichtung 24 vorgesehen, die aus vier Pinnen besteht, die mit Rastnasen 26 versehen. Die Rastnasen 26 sind so geschlitzt, dass ein Federn der Rastnasenhälften aufeinanderzu so erfolgt, dass die Pinnen 24 einschließlich der Rastnasen 26 durch eine Öffnungen geführt werden können und dann nach Ausfedern eine Verrastung hinter einem Vorsprung erfolgt.

Auf den Corepack 12 wird später bei der Montage die Elektronikeinheit aufgesetzt, die in der mittleren Darstellung gezeigt ist. Diese beinhaltet eine Leiterplatte 14, auf deren Oberseite 27 verschiedene Lötstellen vorgesehen sind und die darüber hinaus auch eine Schaltung trägt, die es ermöglicht, eine Software aufzuspielen. Weitere Baugruppen der Elektronik sind auf der Unterseite 28 der Leiterplatte 14 angeordnet, wie beispielsweise Lichtquellen für eine Ladezustandsanzeige sowie Schalter etc..

Über Nieten 30 mit der Leiterplatte 14 verbunden sind die Leiterbleche 16, die über Kontaktbereiche 32 mit den Polen der Akkuzellen 20 über eine materialschlüssige Verbindung verbunden werden. Dabei erfolgt über die Leiterbleche 16 sowohl die Parallel- als auch die Reihenschaltung der einzelnen Akkuzellen untereinander. Darüber hinaus sorgen die Leiterbleche 16 für eine Verbindung mit der Elektronik über die Nieten 30, mittels derer die Leiterbleche 16 an der Leiterplatte 14 befestigt sind.

Eine Verbindung der Zellen 20 mit der Elektronik über Leiterbleche besitzt dabei den Vorteil, dass Schwingungen ausgeglichen werden können, da die Leiterbleche 16 als Federelemente wirken und auch eine mechanische Verbindung zwischen Leiterplatte und Akkuzellen neben der elektrischen erfolgt, die die Leiterplatte nach einer Verschweißung mit den Akkuzellen 20 an diesen festlegt.

Darüber hinaus weist die Leiterplatte 14 Ausnehmungen 34 auf, die im Bereich der Pinne 24 zu liegen kommen und diese umschließen.

Die Leiterplatte 14 wird nun vor Montage mit dem Corepack mit einem Elektronikgehäuse 18 verbunden, das in der oberen Darstellung gezeigt ist. Hierzu wird auf die Leiterplatte 14 ein Moosgummielement 36 aufgelegt, und Leiterplatte und Moosgummielement 36 werden dann in das Elektronikgehäuse 18 eingefügt. Das Elektronikgehäuse 18 wird anschließend mit einem Harz ausgegossen, so dass eine feste Verbindung zwischen der Leiterplatte 14 und dem Elektronikgehäuse 18 gegeben ist.

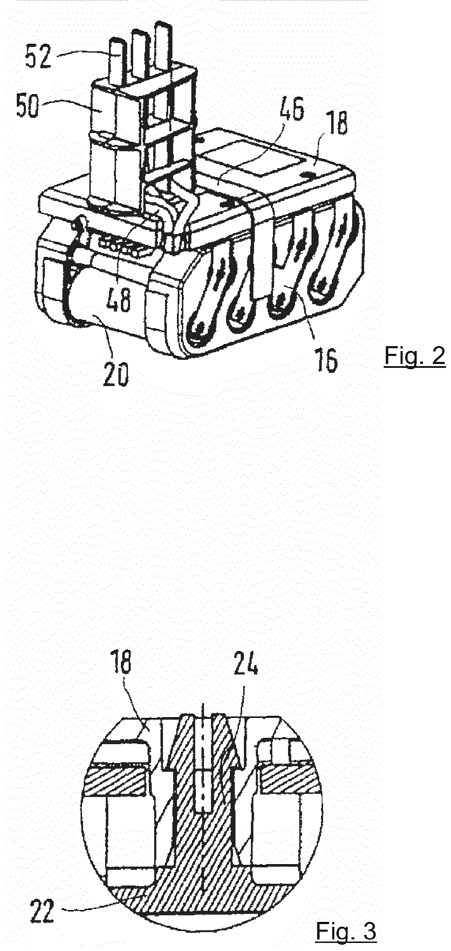

Eine entsprechende Verbindung ist dann in Figur 2 zu erkennen, bei der bereits ein Vergießen von Elektronikkomponenten, wie beispielsweise der Leiterplatte 14 etc., mit dem Elektronikgehäuse 18 erfolgt ist. Über das Moosgummielement 36 wird verhindert, dass in den Bereich der Durchführung 38 Gießharzmasse gelangt. Über die Durchführung 36 wird später ein Aufspielen der Software auf die Leiterplatte vorgenommen.

Darüber hinaus weisen sowohl Leiterplatte 14 als auch das Elektronikgehäuse 18 eine Ausnehmung 40 bzw. 42 in einem Eckbereich auf, über den Kabel 48 (s. Figur 2) von der Leiterplattenunterseite 14 an die Oberseite des Elektronikgehäuses 18 geführt werden können. Die Ausnehmung 42 des Elektronikgehäuses 18 weist hierzu eine Klammer 44 auf, die für eine Führung der Kabel 48 verantwortlich ist. Die Kabel 48 werden dann im Bereich der Durchführung 38 mit einem Verbindungsdom 50 verbunden und zu Kontakten 52 geführt, die später zu einer elektrischen Kontaktierung mit einem Elektrohandwerkzeuggerät dienen (Figur 2).

Figur 2 zeigt weiterhin einen bereits montierten Akkupack, jedoch ohne Akkugehäuse. Hierbei wurde die Elektronikeinheit umfassend das Elektronikgehäuse 18 sowie die nicht mehr zu erkennende Leiterplatte 14 bereits über Schweißverbindungen mit den Akkuzellen 20 verbunden. Zur weiteren Dämpfung wird nun noch vor Montage des Akkugehäuses ein weiteres Dämpfungselement 46 in Form eines Schaumstoffstreifens zwischen Gehäuse und Elektronikgehäuse angeordnet.

Mit dem Gehäuse wird schließlich noch eine mechanische Verrastvorrichtung für den Akkupack mit einem Elektrohandwerkzeuggerät bereitgestellt.

Figur 3 zeigt ein Detail, wobei hier die Verrastung des Corepacks 12 über den Zellenträger 22 und den geschlitzten Pin 24 mit dem Elektronikgehäuse 18 zu sehen ist. Die Pinne 24 sind dabei hinsichtlich ihrer Länge so ausgebildet, dass sie nach Verrastung nicht oder nur unwesentlich über die Oberfläche des Elektronikgehäuses 18 hinausragen.

Auf die vorstehend beschriebene Weise kann besonders einfach eine elektrische und eine mechanische Kopplung von Akkuzellen 20 mit einer Leiterplatte realisiert werden. Über die elektrische Kopplung ist es möglich, den Ladezustand über die Spannung der einzelnen Akkuzellen 20 bzw. Akkuzellenblöcke zu ermitteln, um hierüber den Ladevorgang zu steuern. Darüber hinaus bietet eine entsprechende Anordnung den Vorteil einer sicheren elektrischen Verbindung der Akkuzellen 20 untereinander und zur Elektronik sowie einer Vibrationsfestigkeit.

## Patentansprüche

1. Akkupack, der mit einem Elektrohandwerkzeuggerät verbindbar ist, um das Elektrohandwerkzeuggerät mit elektrischer Energie zu versorgen, aufweisend:
mindestens zwei in Reihe geschaltete Akkuzellen (20) und/oder Akkuzellenblöcke,
eine Elektronikeinheit mit einer Leiterplatte (14), die über Leiterbleche mit den Akkuzellen verbunden ist,
wobei die Leiterbleche (16) zur elektrische Verbindung der in Reihe geschalteten Akkuzellen (20) und/oder Akkuzellenblöcke vorgesehen und über ein Verbindungselement zugleich elektrisch und mechanisch unmittelbar mit der Leiterplatte (14) verbunden sind,
wobei die Längsachsen der Akkuzellen sich in einer Richtung parallel zu der Leiterplatte (14) erstrecken, und
wobei die Elektronikeinheit dazu ausgebildet ist, den Ladezustand über die Spannung der einzelnen Akkuzellen zu überwachen; und
einen Zellenträger (22), durch den die Akkuzellen gelagert und derart durch diesen getrennt sind, dass keine Berührung der Akkuzellen untereinander erfolgt,
wobei der Zellenträger (22) Aussparungen im Bereich der Pole der aufgenommenen Akkuzellen (20) zur Herstellung der elektrischen Verbindung der Akkuzellen (20) mit Kontaktbereichen (32) der Leiterblechen (16) aufweist; und
wobei die Elektronikeinheit (18) mit der Leiterplatte (14) auf dem Zellenträger angeordnet ist und an dem Zellenträger (22) gelagert ist.

2. Akkupack nach Anspruch 1,
wobei die Leiterbleche (16) erste Endabschnitte aufweisen, die sich durch die Aussparungen an dem Zellenträger erstrecken, um die Pole der Akkuzellen über die Kontaktbereiche (32) zu kontaktieren, sowie zweite Endabschnitte, die elektrisch mit der Leiterplatte (14) verbunden sind.

3. Akkupack nach Anspruch 1 oder 2,
wobei wenigstens eines der Leiterbleche (16) dazu ausgebildet ist, jeweils zwei Zellen (20', 20") zu einem Akkuzellenblock parallel zu schalten und dieses mit wenigstens einem weiteren Akkuzellenblock in Reihe zu schalten.

4. Akkupack nach einem der Ansprüche 1 bis 3,
wobei zwei oder mehr Akkuzellen (20) des Akkupacks zu Akkuzellenblöcken parallel geschaltet sind.

5. Akkupack nach einem der vorhergehenden Ansprüche,
wobei die Leiterbleche (16) insbesondere über Nietverbindungen (30) an der Leiterplatte (14) festgelegt sind.

6. Akkupack nach einem der vorhergehenden Ansprüche,
wobei die Akkuzellen (20) Lithiumionenzellen sind.

7. Akkupack nach einem der vorhergehenden Ansprüche,
wobei die Leiterbleche (16) mit den Polen der Akkuzellen (20) über eine Schweiß- oder Lötverbindung verbunden sind.

8. Akkupack nach einem der vorhergehenden Ansprüche,
wobei die Leiterplatte (14) mit den montierten Leiterblechen (16) in ein Elektronikgehäuse (18) aufgenommen und insbesondere hierin eingegossen ist.

9. Akkupack nach einem der vorhergehenden Ansprüche,
wobei das Elektronikgehäuse (18) mittels einer Rastverbindung auf dem Zellenträger (22) festlegbar ist.

10. Elektrohandwerkzeuggerät mit einem Akkupack nach einem der Ansprüche 1 bis 9.

## Claims

1. Battery pack which can be connected to a hand-held power tool in order to supply the hand-held power tool with electrical energy, comprising:
at least two battery cells (20) and/or battery cell blocks connected in series,
an electronic unit with a printed circuit board (14) which is connected to the battery cells via the conductor plates,
wherein the conductor plates (16) are provided for the electrical connection of the battery cells (20) and/or battery cell blocks connected in series and are connected directly to the printed circuit board (14) both electrically and mechanically via a connecting element,
wherein the longitudinal axes of the battery cells extend in a direction parallel to the printed circuit board (14), and
wherein the electronic unit is designed to monitor the state of charge via the voltage of the individual battery cells; and
a cell carrier (22), by which the battery cells are supported and separated by the latter in such a way that the battery cells do not come into contact with one another,
wherein the cell carrier (22) has recesses in the region of the terminals of the battery cells (20) accommodated for establishing the electrical connection of the battery cells (20) with contact regions (32) of the conductor plates (16); and
wherein the electronic unit (18) is arranged with the printed circuit board (14) on the cell carrier and is mounted on the cell carrier (22).

2. The battery pack according to claim 1,
wherein the conductor plates (16) have first end portions which extend through the recesses on the cell carrier in order to contact the terminals of the battery cells via the contact regions (32), and second end portions which are electrically connected to the printed circuit board (14).

3. The battery pack according to claim 1 or 2,
wherein at least one of the conductor plates (16) is designed to connect two cells (20', 20") in each case in parallel to form a battery cell block and to connect this in series with at least one further battery cell block.

4. The battery pack according to any of claims 1 to 3,
wherein two or more battery cells (20) of the battery pack are connected in parallel to form battery cell blocks.

5. The battery pack according to any of the preceding claims,
wherein the conductor plates (16) are fixed to the circuit board (14), in particular via riveted connections (30).

6. The battery pack according to any of the preceding claims,
wherein the battery cells (20) are lithium ion cells.

7. The battery pack according to any of the preceding claims,
wherein the conductor plates (16) are connected to the terminals of the battery cells (20) via a welded or soldered connection.

8. The battery pack according to any of the preceding claims,
wherein the printed circuit board (14) with the mounted conductor plates (16) is accommodated in an electronics housing (18) and, in particular, is moulded therein.

9. The battery pack according to any of the preceding claims,
wherein the electronics housing (18) can be fixed on the cell carrier (22) by means of a latching connection.

10. An electric hand tool with a battery pack according to any of claims 1 to 9.

## Revendications

1. Pack d'accumulateurs qui peut être relié à un outil électrique à main pour alimenter l'outil électrique à main en énergie électrique, présentant :
au moins deux cellules d'accumulateur (20) et/ou blocs des cellules d'accumulateur connectés en série,
une unité électronique avec une carte de circuit imprimé (14) qui est reliée aux cellules d'accumulateur par des tôles de connexion,
les tôles conductrices (16) étant prévues pour la liaison électrique des cellules d'accumulateur (20) et/ou des blocs de cellules d'accumulateur montés en série et étant reliées directement à la carte de circuit imprimé (14) par un élément de liaison à la fois électriquement et mécaniquement,
les axes longitudinaux des cellules d'accumulateur s'étendant dans une direction parallèle à la carte de circuit imprimé (14), et
l'unité électronique étant conçue pour surveiller l'état de charge par le biais de la tension des différents cellules d'accumulateur; et
un support de cellules (22) par lequel les cellules d'accumulateur sont supportées et séparées de telle sorte qu'il n'y a pas de contact entre les cellules d'accumulateur,
le support de cellules (22) présentant des évidements dans la zone des pôles des cellules d'accumulateur (20) logées pour établir la liaison électrique des cellules d'accumulateur (20) avec des zones de contact (32) des tôles conductrices (16); et
l'unité électronique (18) étant disposée avec la carte de circuits imprimés (14) sur le support de cellules et étant logée sur le support de cellules (22).

2. Le pack d'accumulateurs selon la revendication 1,
dans lequel les tôles conductrices (16) comportent des premières parties d'extrémité qui s'étendent à travers les évidements sur le support de cellules pour contacter les bornes des cellules d'accumulateur via les zones de contact (32), ainsi que des secondes parties d'extrémité qui sont connectées électriquement à la carte de circuit imprimé (14).

3. Le pack d'accumulateurs selon la revendication 1 ou 2,
dans lequel au moins l'une des tôles conductrices (16) est conçue pour connecter respectivement deux cellules (20', 20") en parallèle à un bloc de cellules d'accumulateur et pour connecter celui-ci en série avec au moins un autre bloc de cellules d'accumulateur.

4. Le pack d'accumulateurs selon l'une des revendications 1 à 3,
dans lequel deux ou plusieurs cellules d'accumulateur (20) du pack d'accumulateurs sont connectés en parallèle à des blocs de cellules d'accumulateur.

5. Le pack d'accumulateurs selon l'une des revendications précédentes,
les tôles conductrices (16) étant fixées à la carte imprimée (14), en particulier par des liaisons rivetées (30).

6. Le pack d'accumulateurs selon l'une des revendications précédentes,
dans lequel les cellules d'accumulateur (20) étant des éléments au lithium-ion.

7. Le pack d'accumulateurs selon l'une des revendications précédentes,
dans lequel les tôles conductrices (16) sont reliées aux pôles des cellules d'accumulateur (20) par soudage ou brasage.

8. Le pack d'accumulateurs selon l'une des revendications précédentes,
dans lequel la carte de circuits imprimés (14) avec les tôles conductrices (16) est montées logée dans un boîtier électronique (18) et y est en particulier coulée.

9. Le pack d'accumulateurs selon l'une des revendications précédentes,
dans lequel le boîtier électronique (18) pouvant être fixé sur le support d'éléments (22) au moyen d'une liaison par encliquetage.

10. Outil électrique à main comportant un pack d'accumulateurs selon l'une des revendications 1 à 9.
